# EUROPÄISCHE PATENTSCHRIFT

(11) **EP 0 724 080 B1**
(45) Veröffentlichungstag und Bekanntmachung des Hinweises auf die Patenterteilung: **09.06.1999**
(21) Anmeldenummer: 96100023.9
(22) Anmeldetag: 03.01.1996
(51) Int. Cl.: F15B 1/26, B60P 1/44

(54) **Hydraulische Betätigungseinrichtung für Ladebordwände oder dergleichen, insbesondere bei Fahrzeugen**
Hydraulic actuating system for a lifting platform or similar, particularly for automotive vehicles
Système d'actionnement hydraulique pour hayon élévateur ou similaire, en particulier pour véhicules automobiles

(30) Priorität: 07.01.1995 DE 19500333
(43) Veröffentlichungstag der Anmeldung: 31.07.1996
(73) Patentinhaber: Henninghaus, Franz, 41542 Dormagen (DE)
(72) Erfinder: Henninghaus, Franz, 41542 Dormagen (DE)

(56) Entgegenhaltungen:
- WO-A-94/18459
- DE-A- 4 219 462
- DE-U- 8 705 026
- FR-A- 2 017 041
- US-A- 3 977 189
- HYDRAULICS AND PNEUMATICS, Bd. 44, Nr. 6, 1.Juni 1991 Seiten 40-42, 62, XP 000244457 SMITH P M 'MORE THAN JUST A LOWLY TANK'

## Beschreibung

Die Erfindung betrifft eine hydraulische Betätigungseinrichtung nach dem Oberbegriff des Anspruchs 1.

Bei einer durch DE 8705026 U1 bekanntgewordenen Betätigungseinrichtung ist die Motor-Pumpen- und Ventilblock- Einheit in einem Gehäuse liegend angeordnet. Einzelheiten der Verbindung der einzelnen Baueinheiten einschließlich der Verbindung im Hydraulikteil können der Entgegenhaltung nicht entnommen werden. Auf jeden Fall wird für die Unterbringung vergleichsweise viel Platz beansprucht, so daß von einer kompakten. leicht zu montierenden Anordnung keine Rede sein kann.

Aus der DE 4219462 A1 ist ein Hydraulikaggregat zu entnehmen, bei dem ein Elektromotor und eine Pumpe senrkrecht in einem Gehäuse angeordnet sind. Ferner ist ein ölbehälter seitlich neben der Pumpe senkrecht angeordnet und über Winkelbleche am Gehäuse befestigt. Für die hydraulische Verbindung zur Pumpe sind T-Rohrstücke erforderlich. Abgesehen von einem vergleichsweise hohen Bauaufwand sind die Montage und die Demontage einer derartigen Betätigungseinrichtung relativ hoch.

Der Erfindung liegt die Aufgabe zugrunde. eine hydraulische Betätigungseinrichtung der eingangs genannten Art zu schaffen, die eine besonders kompakte Unterbringung, eine leichte Zugänglichkeit sowie eine einfache Montage und Demontage ermöglicht.

Diese Aufgabe wird durch die Betätigungseinrichtung gemäß Anspruch 1 gelöst.

Mit den Mitteln nach der Erfindung kommt man zu einer Betätigungseinrichtung, bei der die hydraulische Verbindung zwischen dem Tank und dem Steuerblock bzw. der Pumpe ohne aufwendige Verschraubungselemente. wie Muttern, Schellen od. dgl auskommt. Eine derartige Betätigungseinrichtung ist nicht nur kompakt, sondern sie läßt sich auch besonders einfach montieren. Zunächst wird der Tank aufrechtstehend in das Gehäuse eingesetzt, wobei die Dichtung bereits vormontiert ist. Danach läßt sich der Steuerblock sehr einfach derart vor dem Tank am Boden des Gehäuses befestigen, daß über die Dichtung ein dichter Abschluß zwischen der Austrittsöffnung des Tanks und des Steuerblocks sichergestellt wird.

Nach dem Einbau der weiteren Baugruppen, wie Pumpe, Motor usw. ist es lediglich notwendig. die eingenommenen Positionen der Bauteile zu fixieren. Dies geschieht beispielsweise mit Hilfe der in den Unteransprüchen 5 bis 7 aufgeführten Merkmale.

Das im Bereich einer zur Pumpe führenden Saugleitung angeordnete Dichtelement besteht aus einem zelligen Elastomer, vorzugsweise aus Polyurethan.

Vorteilhaft ist das Dichtelement teilweise in einer Ausnehmung eines in der Außenwandung des Tanks angeordneten Flansches und teilweise in einer seitlichen Ausnehmung des Steuerblocks angeordnet.

Bevorzugte Ausführungsbeispiele der Erfindung sind in der Zeichnung dargestellt und werden im folgenden näher erläutert. Es zeigen:

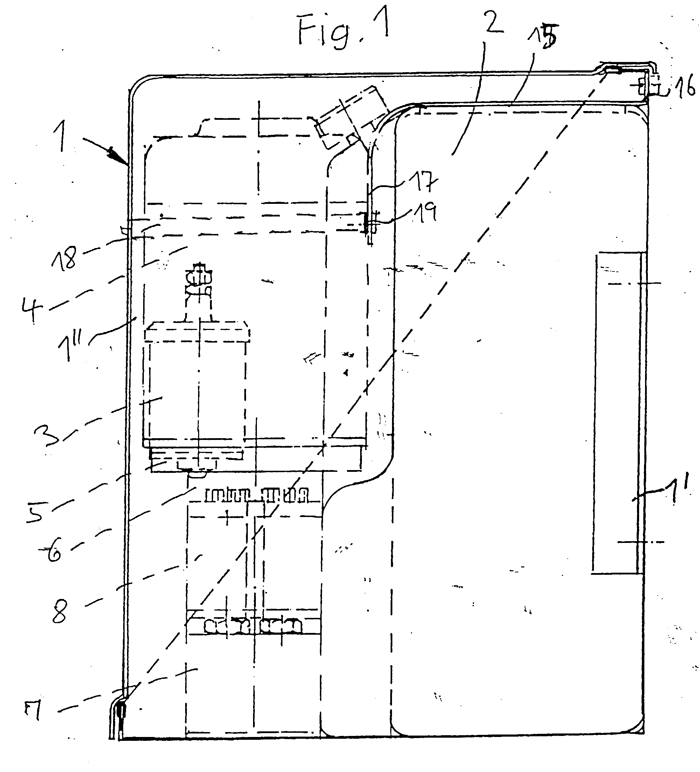

- Fig. 1: eine hydraulische Betätigungseinrichtung in der Vorderansicht,

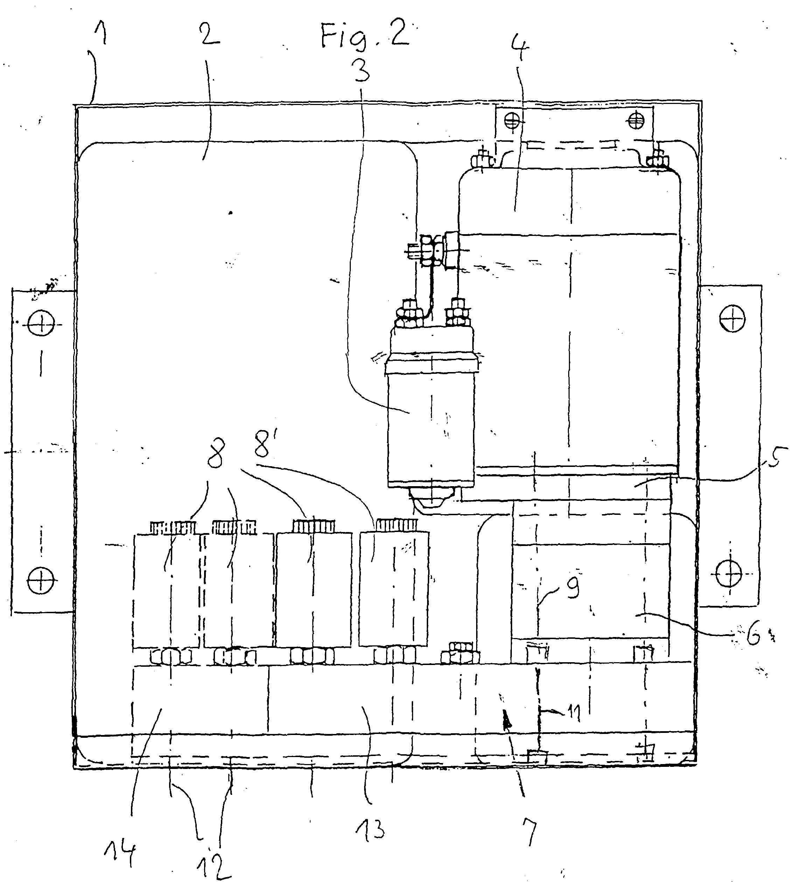

- Fig. 2: die zugehörige Seitenansicht,

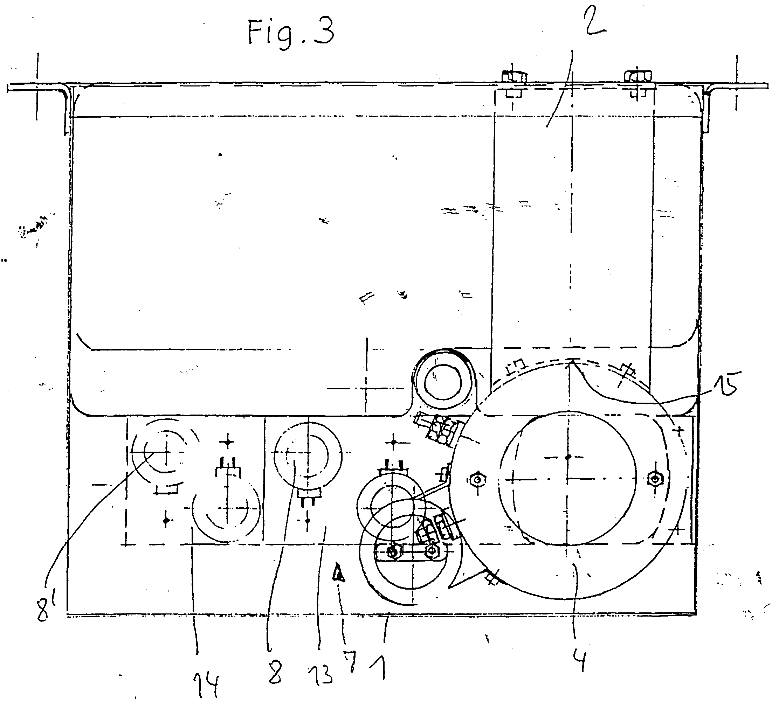

- Fig. 3: die entsprechende Draufsicht,
- Fig. 4: eine Schnittdarstellung durch einen Teil der Betätigungseinrichtung im vergrößerten Maßstab und
- Fig. 5: eine abgewandelte Ausführungsform eines Dichtelementes.

Eine hydraulische Betätigungseinrichtung für Ladebordwände oder dergleichen weist ein an einer nicht dargestellten Tragplatte eines im einzelnen gleichfalls nicht dargestellten Fahrzeugaufbaus befestigtes Gehäuse 1 auf, innerhalb dessen ein Tank 2, ein ein Schaltrelais 3 aufweisender elektrischer Antriebsmotor 4 sowie eine damit über einen Flansch 5 verbundene Pumpe 6 sowie ein Steuerblock 7 mit Steuerventilen 8 untergebracht sind. Die Pumpe 6 und der Antriebsmotor 4 sind über diagonal versetzt zueinander liegende, von unten einsetzbare Schrauben 9 zu einer Baueinheit miteinander verbunden. In der gleichen Weise sind über weitere, gleichfalls von unten durch den Steuerblock 7 einsetzbare Schrauben 11 der Steuerblock 7 mit der Pumpe 6 bzw. dem Antriebsmotor 4 verbunden. Von der Unterseite gehen in der Zeichnung nur andeutungsweise gezeigte Leitungen 12 zu nicht dargestellten Hydraulikzylindern ab, die durch entsprechende Beeinflussung der Steuerventile 8 zur Betätigung der Ladebordwand oder dergleichen beaufschlagt werden können. Die Grundfunktionen der Ladebordwand können durch die einem Grundblock 13 des Steuerblocks 7 zugeordneten Steuerventile 8 erreicht werden, während für zusätzliche Funktionen, z. B. bei schweren Lasten, ein Zusatzblock 14 mit entsprechenden zusätzlichen Steuerventilen 8' notwendig ist.

Zwecks optimaler Raumausnutzung besitzt der Tank 2 eine Einbuchtung 15 zur teilweisen Aufnahme des Antriebsmotors 4. Der Tank 2 ist mittels eines im wesentlichen Z-förmig ausgebildeten Halters 15 im Gehäuse befestigt und zwar dergestalt, daß der Halter mit seinem einen Schenkel 16 am Gehäuse befestigt ist und mit seinem anderen Schenkel die nach innen gerichtete Wandung des Tanks 2 umgreift.

Ferner ist der Antriebsmotor 4 zusätzlich mittels eines im wesentlichen horizontal angeordneten Spannbandes 18 gegen seitliche Bewegung gesichert, welches einerseits am Gehäuse angeschraubt ist und andererseits den einen freien Schenkel 17 des Halters 15 hintergreift. Zur weiteren Abstützung des Antriebsmotors 4 ist zwischen dessen Außenwandung und des innenliegenden Schenkels 17 des Halters 15 ein elastisches Zwischenstück 19 angeordnet.

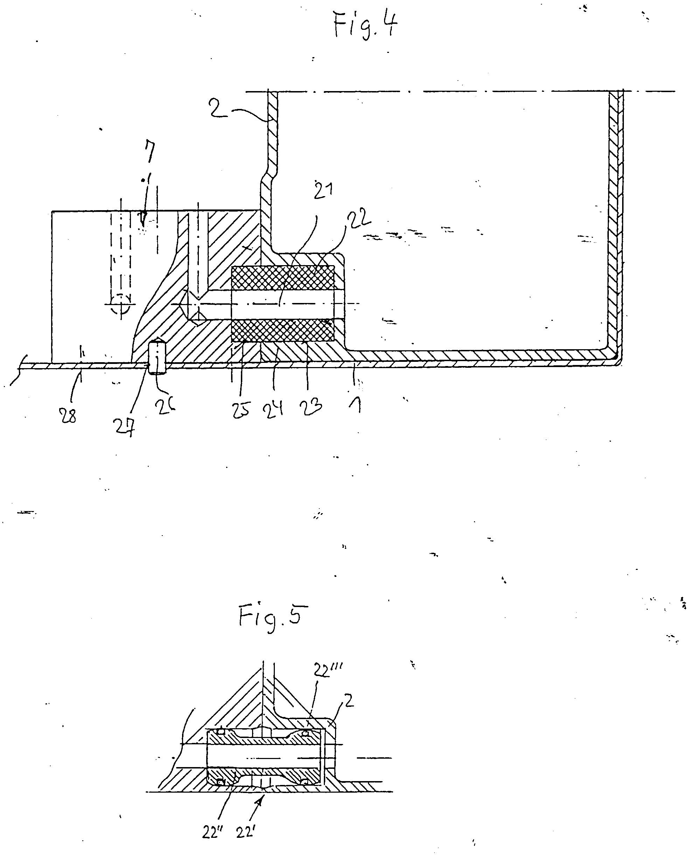

Wie aus Figur 4 hervorgeht, steht der Tank 2 über eine Saugleitung 21 mit dem Steuerblock 7 in Verbindung. Um hier zu einer verschraubungslosen Anordnung zu kommen, sind der Tank 2 und der Steuerblock 7 im Bereich der zur Pumpe führenden Saugleitung 21 durch ein hochelastisches Dichtelement 22 abgedichtet. Dieses Dichtelement 22 besteht vorzugsweise aus einem zelligen Elastomer, vorzugsweise aus Polyurethan. Das Dichtelement 22 ist teilweise in einer Ausnehmung 23 eines in der Außenwandung des Tanks 2 angeordneten Flansches 24 und teilweise in einer seitlichen Ausnehmung 25 des Steuerblocks 7 angeordnet. Zur Arretierung des Steuerblocks 7 im Gehäuse 1 dient ein Arretierstift 26, der in eine Ausnehmung 27 des Gehäuses 1 einrastet. Zusätzlich können Verschraubungselemente 28 vorgesehen sein, um den Steuerblock 7 nach seiner endgültigen Lage in bezug auf den Tank 2 im Gehäuse 1 zu befestigen.

Zur leichten Zugänglichkeit der Bauteile innerhalb des Gehäuses kann dieses zweigeteilt ausgebildet sein und beispielsweise aus einem am Fahrzeugaufbau befestigten Aufnahmeteil 1' und einem entlang einer im wesentlichen diagonal verlaufenden Trennlinie darauf wasserdicht aufsetzbaren Deckelteil 1'' bestehen.

Fig. 5 zeigt eine abgewandelte Ausführungsform eines Dichtelementes 22'. Es wird von einem in axialer und radialer Richtung bewegbar gelagerten Tragkörper 22'' mit ballig ausgebildeten Enden und darin eingesetzten Dichtringen (O-Ring) 22''' gebildet.

Die hydraulische Betätigungseinrichtung nach der Erfindung ist auch ohne weiteres bei stationären Hubeinrichtungen, wie z. B. Hubtischen, einsetzbar.

## Patentansprüche

1. Hydraulische Betätigungseinrichtung für Ladeboardwände bei Fahrzeugen oder stationären Hubeinrichtungen, mit einem Gehäuse (1) zur Aufnahme eines mit dem Gehäuse(1) über einen Halter (15) befestigten und im wesentlichen aufrecht stehend angeordneten Tanks(2), einer seitlich daneben liegenden, gleichfalls im wesentlichen senkrecht angeordneten Pumpe(6) sowie einem an dessen Oberseite angeflanschten Antriebsmotor (4) und einem im Bodenbereich des Gehäuses (1) befestigten Steuerblock (7), der mit dem Tank (2) strömungsmäßig verbunden ist, **dadurch gekennzeichnet,** daß die Strömungsverbindung zwischen dem Tank (2) und dem Steuerblock (7) über ein verschraubungsfrei ausgebildetes, hochelastisches Dichtelement (22,22') abgedichtet ist.

2. Betätigungseinrichtung nach Anspruch 1, **dadurch gekennzeichnet,** daß das Dichtelemente (22, 22') aus einem zelligen Elastomer, vorzugsweise aus Polyurethan besteht.

3. Betätigungseinrichtung nach Anspruch 1 oder 2, **dadurch gekennzeichnet,** daß das Dichtelement (22, 22') teilweise in einer Ausnehmung (23) eines in der Außenwandung des Tanks (2) angeordneten Flansches (24) und teilweise in einer seitlichen Ausnehmung (25) des Steuerblocks (7) angeordnet ist.

4. Betätigungseinrichtung nach Anspruch 3, **dadurch gekennzeichnet,** daß das Dichtelement (22, 22') von einem sowohl in axialer als auch radialer Richtung bewegbaren Tragkörper (22") mit vorzugsweise ballig ausgebildeten Enden und darin gelagerten Dichtringen (22"')(0-Ring) gebildet ist.

5. Betätigungseinrichtung nach einem oder mehreren der Ansprüche 1 bis 4, **dadurch gekennzeichnet,** daß der Tank (2) auf der Seite des Antriebsmotors (4) eine diesen teilweise aufnehmende Einbuchtung (10) aufweist und daß der Halter (15) im wesentlichen Z-formig ausgebildet ist, der mit seinem einen Schenkel (16) am Gehäuse (1) befestigt ist und mit seinem anderen, mit einem Spannband (18) verbundenen Schenkel (17) den Tank (2) von oben her umgreift.

6. Betätigungseinrichtung nach Anspruch 5, **dadurch gekennzeichnet,** daß zwischen der Außenwandung des Antriebsmotors (4) und der zugewandten Seite des den Tank (2) umgreifenden Schenkels (17) des Halters (15) ein elastisches Zwischenstück (19) gelagert ist.

7. Betätigungseinrichtung nach einem oder mehreren der Ansprüche 1 bis 6, **dadurch gekennzeichnet,** daß der Steuerblock (7) in der Einbaulage des Dichtelements (22) durch einen in eine Öffnung (27) des Gehäuses (1) einrastbaren Arretierstift (26) gehalten und gegebenenfalls durch gegenüber zur Befestigung des Steuerblocks (7), der Pumpe (6) und dessen Antriebsmotor (4) jeweils von der Unterseite eingesetzten Schrauben (9,11) zusätzliche Schrauben (28) von der Unterseite her mit dem Gehäuse (1) verschraubbar ist.

8. Betätigungseinrichtung nach einem oder mehreren der Ansprüche 1 bis 7, **dadurch gekennzeichnet,** daß der Steuerblock (7) aus einem Grundblock (13) mit Steuerventilen (8) für eine Normalfunktion der Ladebordwand und einem Zusatzblock (14) mit zusätzlichen Steuerventilen (8') für eine Zusatzfunktion, z.B. bei schweren Lasten, besteht.

9. Betätigungseinrichtung nach einem oder mehreren der Ansprüche 1 bis 8, **dadurch gekennzeichnet,** daß das Gehäuse (1) zweigeteilt ausgebildet ist und aus einem Aufnahmeteil (1') und einem entlang einer im wesentlichen diagonal verlaufenden Trennlinie darauf wasserdicht aufsetzbaren Deckelteil (1") besteht.

## Claims

1. An hydraulic control device for lift gates / hydraulic platforms on vehicles or stationary lifting equipment resp. featuring a housing (1) to accommodate a preferably vertically positioned reservoir (2) attached to the housing (1) by means of a bracket-type support (15), furthermore featuring a pump (6) positioned laterally of the reservoir (2) and arranged in vertical position, too; said control device also featuring a drive motor (4) securely flanged with its topface and - mounted onto the bottom section of the housing (1) - a control unit (7) which ensures free flow by being connected to the reservoir (2); the entire arrangement thereby characterized that the flow passage between the reservoir (2) and the control unit (7) is sealed by a resilient sealing element (22, 22') of a non-bolted design.

2. Controlling device accord. to claim 1, thereby characterized that the sealing element (22, 22') consists of a cellular elastomer, preferably of a polyurethane elastomer.

3. Controlling device accord. to either claim 1 or 2, thereby characterized that the sealing element (22, 22') is partly placed in a recess (23) provided in a flange (24) located in the outer wall of the reservoir (2) and that said sealing element partly rests in a lateral recess (25) provided on the control unit (7).

4. Control device accord. to claim 3, thereby characterized that the sealing element (22, 22') is formed by a supporting body (22") which is supported in a movable manner in both, axial and radial direction, and which features crowned end sections as well as sealing rings (22"') embedded therein.

5. Control device accord. to one or several of the claims 1 through 4, thereby characterized that the reservoir (2) in its wall facing the drive motor (4) features a recess (10) partly accommodating said motor (4) and that a supporting member (15) of mainly Z-shaped design is secured with one of its legs (16) on the housing (1), while the other leg (17) is connected to a brace (18) embracing the reservoir (2) from above.

6. Control device accord. to claim 5, thereby characterized that an elastic intermediate member (19) is fixed between the outer wall of the drive motor (4) and the facing side of the bracket's (15) inner leg (17) which embraces the reservoir (2).

7. Control device accord. to one or several of the claims 1 through 6, thereby characterized that the control unit (7) is held in the installation position of the sealing element (22) by means of a stop-pin (26) which engages in a corresponding aperture (27) provided in the housing (1). If necessary, for securing purposes additional bolting members (28) are used to fix the control unit (7). the pump (6) and the respective drive motor (4) from below to the housing (1); the bolts (9, 11) serve the same purpose with regard to the reservoir (2).

8. Control device accord. to one or several of the claims 1 through 7, thereby characterized that the control unit (7) comprises a basic block (13) featuring control valves (8) for a standard operation of the hydraulic platform / lifting gate, as well as an auxiliary block (14) with additional control valves (8') for any auxiliary function, e.g. the handling of extra-heavy loads.

9. Control device accord. to one or several of the claims 1 through 8, thereby characterized that the housing (1) features a bipartite design comprising a receptacle-type part (1') and a cover-type section (1'') which can be mounted thereupon in a watertight manner, said lid-section (1'') extending along a mainly diagonally running parting line.

## Revendications

1. Dispositif de commande hydraulique pour bordages de chargement de véhicules ou mécanismes élévateurs stationnaires, composé d'un boîtier (1) pour recevoir un réservoir (2) fixé dans le boîtier (1) par l'intermédiaire d'un crampon (15) et disposé essentiellement dans une position debout, d'une pompe (6) positionnée latéralement à côté du réservoir, essentiellement en position verticale, et d'un moteur d'entraînement (4) bridé sur sa face supérieure, ainsi que d'un bloc de commande (7) fixé au niveau du fond du boîtier (1), relié au réservoir (2) dans le sens de l'écoulement, caractérisé en ce que la liaison d'écoulement entre le réservoir (2) et le bloc de commande (7) est étanchéisée par l'intermédiaire d'un élément d'étanchéité (22, 22') hautement élastique, conçu de manière à ne nécessiter aucun vissage.

2. Dispositif de commande selon revendication 1, caractérisé en ce que l'élément d'étanchéité (22, 22') est réalisé dans un élastomère cellulaire, de préférence en polyuréthane.

3. Dispositif de commande selon revendication 1 ou 2, caractérisé en ce que l'élément d'étanchéité (22, 22') est disposé partiellement dans un évidement (23) d'une bride (24) disposée dans la paroi externe du réservoir (2), et partiellement dans un évidement latéral (25) du bloc de commande (7).

4. Dispositif de commande selon revendication 3. caractérisé en ce que l'élément d'étanchéité (22, 22') est formé par une enveloppe (22") pouvant se déplacer tant dans le sens axial que dans le sens radial et dont les extrémités présentent de préférence une forme convexe pour recevoir les anneaux d'étanchéité (22"') (anneau O).

5. Dispositif de commande selon l'une ou plusieurs des revendications 1 à 4, caractérisé en ce que le réservoir (2) présente, sur le côté du moteur d'entraînement (4). un enfoncement (10) qui reçoit une partie du moteur, et en ce que le crampon (15) est réalisé essentiellement en forme de Z dont l'une des branches (16) est fixée sur le boîtier (1), l'autre branche (17), reliée à une bande de serrage (18), entourant le réservoir (2) par le haut.

6. Dispositif de commande selon revendication 5, caractérisé en ce qu'une pièce intermédiaire élastique (19) est placée entre la paroi externe du moteur d'entraînement (4), le côté orienté vers lui de la branche (17) du crampon (15) entourant le réservoir (2).

7. Dispositif de commande selon l'une ou plusieurs des revendications 1 à 6, caractérisé en ce que le bloc de commande (7) est maintenu dans la position de montage de l'élément d'étanchéité (22) par l'intermédiaire d'une cheville d'arrêt (26) encliquetable dans un orifice (27) du boîtieur (1) et pouvant être, le cas échéant, vissé sur le boîtier (1), par en-dessous, à l'aide de vis supplémentaires (28) insérées à l'opposé des vis (9, 11) servant à la fixation du bloc de commande (7), de la pompe (6) et de son moteur d'entraînement (4), également insérées par en-dessous.

8. Dispositif de commande selon l'une ou plusieurs des revendications 1 à 7, caractérisé en ce que le bloc de commande (7) est composé d'un bloc de base (13) équipé de soupapes de manoeuvre (8) pour un fonctionnement normal des bordages de chargement, et d'un bloc complémentaire (14) doté de soupapes de manoeuvre (8') supplémentaires pour un fonctionnement complémentaire, par exemple en cas de charges lourdes.

9. Dispositif de commande selon l'une ou plusieurs des revendications 1 à 8, caractérisé en ce que le boîtier (1) est réalisé en deux parties et composé d'une pièce de réception (1') et d'une partie de couverture (1") qui se pose sur celle-ci de façon étanche, le long d'une ligne de séparation essentiellement diagonale.
